# EUROPEAN PATENT SPECIFICATION

(11) **EP 4 002 731 B1**
(45) Date of publication and mention of the grant of the patent: **02.12.2026**
(21) Application number: 20892490.2
(22) Date of filing: 21.09.2020
(51) Int. Cl.: H04L 1/00, G10L 19/005, G10L 15/04, G10L 25/48, G10L 25/90, G10L 15/02

(54) **VOICE PROCESSING METHOD AND APPARATUS, COMPUTER-READABLE STORAGE MEDIUM AND COMPUTER DEVICE**
SPRACHVERARBEITUNGSVERFAHREN UND -VORRICHTUNG, COMPUTERLESBARES SPEICHERMEDIUM UND COMPUTERVORRICHTUNG
PROCÉDÉ ET APPAREIL DE TRAITEMENT DE VOIX, SUPPORT D'INFORMATIONS LISIBLE PAR ORDINATEUR ET DISPOSITIF INFORMATIQUE

(30) Priority: 27.11.2019 CN 201911179869
(43) Date of publication of application: 25.05.2022
(73) Proprietor: Tencent Technology (Shenzhen) Company Limited, Shenzhen, Guangdong 518057 (CN)
(72) Inventor: LIANG, Junbin, Shenzhen, Guangdong 518057 (CN)
(74) Representative: Cabinet Beau de Loménie
(86) International application number: PCT/CN2020/116511
(87) International publication number: WO 2021/103778

(56) References cited:
- WO-A1-2010/141762
- CN-A- 101 072 083
- CN-A- 108 183 774
- CN-A- 108 684 050
- CN-A- 110 838 894
- CN-A- 111 245 734
- US-A1- 2017 103 761
- DOMINGO MARI CARMEN ET AL: "Cross-layer analysis of error control in underwater wireless sensor networks", COMPUTER COMMUNICATIONS, vol. 35, no. 17, 27 July 2012 (2012-07-27), pages 2162 - 2172, XP028941710, ISSN: 0140-3664, DOI: 10.1016/J.COMCOM.2012.07.010
- XIONG FEIFEI ET AL: "Phonetic Analysis of Dysarthric Speech Tempo and Applications to Robust Personalised Dysarthric Speech Recognition", ICASSP 2019 - 2019 IEEE INTERNATIONAL CONFERENCE ON ACOUSTICS, SPEECH AND SIGNAL PROCESSING (ICASSP), IEEE, 12 May 2019 (2019-05-12), pages 5836 - 5840, XP033565644, DOI: 10.1109/ICASSP.2019.8683091

## Description

### RELATED APPLICATION

This application claims priority to Chinese Patent Application No. 2019111798696, entitled "VOICE PROCESSING METHOD AND APPARATUS, COMPUTER-READABLE STORAGE MEDIUM, AND COMPUTER DEVICE" filed with the China National Intellectual Property Administration on November 27, 2019.

### FIELD OF THE TECHNOLOGY

This application relates to the field of voice processing technologies, and in particular, to a voice processing method and apparatus, a computer-readable storage medium, and a computer device.

### BACKGROUND OF THE DISCLOSURE

During a voice call, a voice may be transmitted from a transmitting end to a receiving end through a network. Due to network quality problems, a voice packet may be lost during the voice transmission, resulting in stuttering and discontinuity of the voice received by the receiving end, which affects listening of the voice.

In the conventional anti-packet loss solution, forward error correction (FEC) encoding is performed on a voice packet to obtain a redundancy packet. Both the voice packet and redundancy packet are transmitted to the receiving end. If packet loss occurs, the receiving end can recover a complete voice at a packet loss location according to the redundancy packet, thereby achieving the effect of anti-packet loss. A greater FEC redundancy degree (that is, a ratio of a quantity of redundancy packets to a quantity of voice packets) indicates a stronger anti-packet loss capability, but a large amount of bandwidth needs to be consumed. If the FEC redundancy degree is relatively small, the error correction effect cannot be achieved. WO 2010/141762 A1 discloses a method for preventing the loss of information within a speech frame, where a first frame to be encoded is selected, a determination is made as to whether or not a second speech frame is a critical speech frame based on the information within the second speech frame and one or more adjacent speech frames, at least a part of an encoded version of the second speech frame is created according to a selected forward error correction mode if the second frame is a critical speech frame.

### SUMMARY

According to embodiments of this application, a voice processing method a computer-readable storage medium, and a computer device are provided.

The invention is set out in the appended set of claims.

Details of one or more embodiments of this application are provided in the subsequent accompanying drawings and descriptions. Other features and advantages of this application become obvious with reference to the specification, the accompanying drawings, and the claims.

### BRIEF DESCRIPTION OF THE DRAWINGS

FIG. 1 is a diagram of an application environment of a voice processing method according to an embodiment.
FIG. 2 is a schematic flowchart of a voice processing method according to an embodiment.
FIG. 3 is a schematic diagram of voice framing according to an embodiment.
FIG. 4a is a schematic diagram of performing FEC encoding by a transmitting end according to an embodiment.
FIG. 4b is a schematic flowchart of a voice processing method according to another embodiment.
FIG. 5 is a schematic flowchart of steps of calculating a voice speed value according to an embodiment.
FIG. 6 is a schematic flowchart of steps of adjusting an FEC redundancy degree, comparing an obtained target redundancy degree with a redundancy degree upper limit and a redundancy degree lower limit, and performing FEC encoding according to a comparison result according to an embodiment.
FIG. 7 is a schematic flowchart of steps of adjusting an FEC redundancy degree and performing FEC encoding by a transmitting end, and performing FEC decoding to restore a voice encoded packet by a receiving end according to an embodiment.
FIG. 8 is a structural block diagram of a voice processing apparatus according to an embodiment.
FIG. 9 is a structural block diagram of a voice processing apparatus according to another embodiment.
FIG. 10 is a structural block diagram of a computer device according to an embodiment.

### DESCRIPTION OF EMBODIMENTS

To make the objectives, technical solutions, and advantages of this application clearer and more understandable, this application is further described in detail below with reference to the accompanying drawings and the embodiments. It is to be understood that the specific embodiments described herein are merely used for explaining this application but are not intended to limit this application.

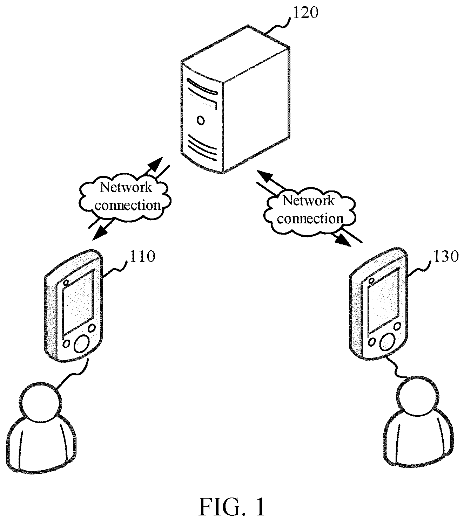

FIG. 1 is a diagram of an application environment of a voice processing method according to an embodiment. Referring to FIG. 1, the voice processing method is applied to a voice processing system. The voice processing system includes a terminal 110, a transmission node 120, and a terminal 130. The terminal 110, the transmission node 120, and the terminal 130 are connected through a network. The terminal 110 may be used as a transmitting end (or a receiving end), and may be specifically a desktop terminal or a mobile terminal. The mobile terminal may be specifically at least one of a mobile phone, a tablet computer, a notebook computer, and the like. Correspondingly, the terminal 130 may be used as a receiving end (or a transmitting end). When the terminal 110 is a transmitting end, the terminal 130 may be a receiving end, and may be specifically a desktop terminal or a mobile terminal. The mobile terminal may be specifically at least one of a mobile phone, a tablet computer, a notebook computer, and the like. The transmission node 120 may include a switch (or router) and another transmission device in the network, such as a synchronous digital hierarchy (SDH) or packet transport network (PTN) device. In addition, the transmission node 120 may further include communication base stations, such as 3G, 4G, 5G, and subsequent versions of communication base stations.

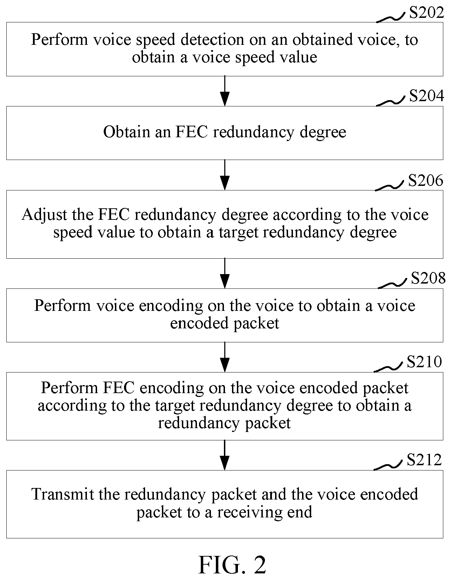

As shown in FIG. 2, in an embodiment, a voice processing method is provided. In this embodiment, descriptions are provided mainly by using an example in which the method is applied to the terminal 110 in FIG. 1. Referring to FIG. 2, the voice processing method includes the following steps:
S202: Perform voice speed detection on an obtained voice, to obtain a voice speed value.

The voice may be a voice uttered by a user during a voice or video call, or may be a voice uttered during a voice or video live broadcast. The voice speed value may be a value used to indicate a speaking speed of a speaker, and different speakers may have a certain difference in voice speed values. The voice speed value may be an average voice speed value or an instantaneous voice speed value.

In an embodiment, during a voice or video call, the terminal collects the voice uttered by the user by using a microphone. For example, when the user uses an instant messaging application to make a voice or video call with another person, the terminal uses a built-in microphone to collect a voice uttered by the user. The instant messaging applications may include social applications and other applications for instant messaging.

In an embodiment, during a voice or video live broadcast, the terminal collects the voice uttered by the user by using a microphone. For example, when the user uses live streaming software to make a voice or video live broadcast with another person, the terminal uses a built-in microphone to collect a voice uttered by the user.

In an embodiment, the terminal performs phoneme detection on the collected voice to obtain a phoneme sequence; calculates a quantity of phonemes per unit time based on the obtained phoneme sequence; and determines the voice speed value according to the quantity of phonemes per unit time. The quantity of phonemes may be determined by hopping of a pitch period or a pitch frequency. For example, if there are 20 hoppings of the pitch period or the pitch frequency per unit time, it may be determined that there are 20 phonemes per unit time. Phonemes are divided into two categories of vowels and consonants. A phoneme is a minimum phonetic unit obtained through division according to a natural attribute of a voice. According to a pronunciation action in a syllable, one action constitutes one phoneme. For example, the Chinese syllable "a" has only one phoneme, "ai" has two phonemes, and "dai" has three phonemes.

In an embodiment, the terminal performs phoneme detection on the collected voice to obtain a phoneme sequence; converts the phoneme sequence into a corresponding word sequence; calculates a quantity of words per unit time based on the converted word sequence; and determines the voice speed value according to the quantity of words per unit time.

In an embodiment, the terminal uses a window function to frame the collected voice, so as to obtain the framed voice. Specifically, the collected voice may be framed by means of overlapping segments, so that a smooth transition between frames can be implemented. An overlapping part of a previous frame and a next frame is referred to as a frame shift, and a ratio between a frame length of the frame shift and a frame length of the voice frame is usually in a range of 0 to 0.5. The window function may be a rectangular window function, a Hanning window function, a Hamming window function, or a Blackman window function.

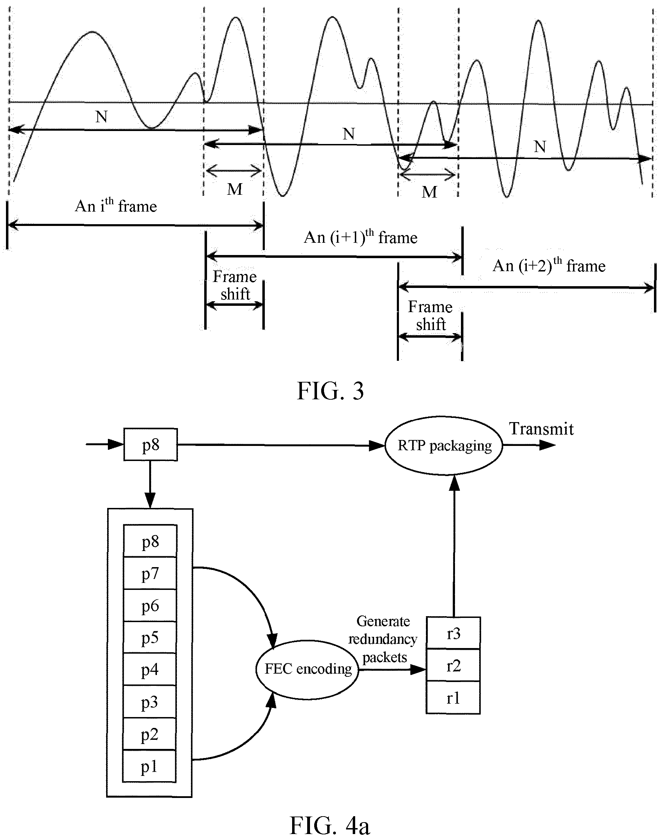

For example, it is assumed that the voice is represented by *s*(*n*), a window function *ω*(*n*) is used to multiply *s*(*n*) to form a windowed voice *Sω*(*n*) = *s*(*n*)×*ω*(*n*)*.* As shown in FIG. 3, the frame length of the voice frame is N, and the frame length of the shift frame is M.

In an embodiment, the terminal detects each voice frame and detects whether each voice frame includes voice content, so that the terminal can perform voice speed detection on a voice frame including voice content, to obtain a phoneme sequence; calculates a quantity of phonemes per unit time based on the obtained phoneme sequence; and determines the voice speed value according to the quantity of phonemes per unit time. Alternatively, the terminal converts the phoneme sequence into a corresponding word sequence; calculates a quantity of words per unit time based on the converted word sequence; and determines the voice speed value according to the quantity of words per unit time.

S204: Obtain an FEC redundancy degree.

The FEC redundancy degree is configured according to a packet loss rate. FEC is an error control method, that is, a redundancy packet is also transmitted while transmitting a voice. When a packet loss or error occurs during transmission, the receiving end is allowed to reconstruct the lost or erroneous part of the voice based on the redundancy packet. For example, before the voice is sent to a transmission channel, FEC encoding is pre-performed on a voice encoded packet corresponding to the voice to obtain a redundancy packet with a feature of the voice, and the voice encoded packet and the redundancy packet are transmitted to the receiving end. The receiving end decodes the received voice encoded packet and redundancy packet, to find and correct an erroneous or lost voice encoded packet during the transmission. The FEC redundancy degree may represent a ratio of a quantity of redundancy packets formed to a quantity of voice encoded packets during the FEC encoding. The FEC redundancy degree may be configured according to a loss rate of the voice encoded packet.

In an embodiment, when receiving a voice encoded packet transmitted by the other party, the terminal determines the FEC redundancy degree configured corresponding to a packet loss rate according to the received voice encoded packet. When the packet loss rate is relatively large, the configured FEC redundancy degree is also relatively large; and when the packet loss rate is relatively small, the configured FEC redundancy degree is also relatively small.

In an embodiment, the terminal may further predict the packet loss rate according to the network quality, and configure the corresponding FEC redundancy degree according to the predicted packet loss rate. Alternatively, the terminal may also configure the corresponding FEC redundancy degree according to the network quality.

For example, when the network quality is relatively poor, the packet loss rate is usually large, and a large FEC redundancy degree may be configured in this case. When the network quality is relatively good, the packet loss rate is usually small, and a relatively small FEC redundancy degree may be configured in this case.

S206: Adjust the FEC redundancy degree according to the voice speed value to obtain a target redundancy degree.

Due to different languages and speaking habits of different speakers, the corresponding voice speed values are different when speaking. When a voice speed of a speaker is fast, an amount of information included in a voice collected per unit time is relatively large, that is, many different phonemes are included within a certain period of time. Therefore, even a small quantity of lost voice encoded packets may result in the loss of many phonemes, and consequently, the amount of information obtained by the receiving end is incomplete. Similarly, when a voice speed of the speaker is relatively slow, an amount of information included in a voice collected per unit time is relatively small, that is, there are fewer phonemes with a certain period of time, and most of the phonemes are phonemes with similar features. In this case, even if a small amount of voice packets are lost, the user at the receiving end may learn the content expressed by the transmitter through the remaining phonemes received.

In an embodiment, when the voice speed value is relatively large, the terminal may increase the FEC redundancy degree; and when the voice speed value is relatively small, the terminal may decrease the FEC redundancy degree, thereby obtaining the target redundancy degree.

In an embodiment, when the voice speed value is relatively large, the terminal may obtain a corresponding first adjustment coefficient, and use a product of the first adjustment coefficient and the FEC redundancy degree as the target redundancy degree. When the voice speed value is relatively small, the terminal may obtain a corresponding second adjustment coefficient, and use a product of the second adjustment coefficient and the FEC redundancy degree as the target redundancy degree.

S208: Perform voice encoding on the voice to obtain a voice encoded packet.

In an embodiment, the terminal samples the collected voice, where a sampling frequency is greater than two times the highest frequency of a voice signal. The terminal then quantizes the sampled voice. The quantization may be uniform quantization or non-uniform quantization, and the non-uniform quantization may use a µ-law compression algorithm or an A-law compression algorithm. Finally, the terminal encodes the quantized voice, and packs voice encoded data obtained through encoding into a plurality of voice encoded packets. The encoding methods include waveform encoding (such as pulse code modulation (PCM) encoding), parameter encoding, and hybrid encoding.

When uniform quantization is used to quantize the sampled voice, a same quantization interval is used for both a large-amplitude voice and a small-amplitude voice, to adapt to the large-amplitude voice and ensure quantization accuracy. When non-uniform quantization is used, a larger quantization interval is used for a large-amplitude voice, and a smaller quantization interval is used for a small-amplitude voice, so that a smaller quantization bit can be used while ensuring accuracy.

S210: Perform FEC encoding on the voice encoded packet according to the target redundancy degree to obtain a redundancy packet.

In an embodiment, the terminal performs FEC encoding on the voice encoded packet according to the target redundancy degree, to obtain the redundancy packet. A quantity of the redundancy packets is a product of the target redundancy degree and a quantity of the voice encoded packets.

For example, it is assumed that the quantity of the voice encoded packets is k, a word length is w bits, and the value of w may be 8, 16, or 32. The terminal performs FEC encoding on the k voice encoded packets according to the target redundancy degree, and generates m redundancy packets corresponding to the voice encoded packets.

S212: Transmit the redundancy packet and the voice encoded packet to a receiving end.

In an embodiment, the terminal uses a real-time transport protocol (RTP) to encapsulate the voice encoded packet and the redundancy packet to obtain a voice packet after the encapsulation, and then transmits the voice packet obtained by encapsulating the voice encoded packet and the redundancy packet to the receiving end.

The RTP may provide end-to-end transmission services with real-time features for the voice. The RTP implements orderly transmission. The RTP allows the receiving end to reorganize a packet sequence of the transmitting end. In addition, a serial number may be used to determine a proper packet location. The voice packet is a voice packet in an RTP message format, and includes two parts: a header and a payload. The payload is the voice encoded packet and the redundancy packet.

For example, it is assumed that there are k voice encoded packets *D̅ =* (*D*₁, *D*₂,..., *Dₖ*), the FEC redundancy degree is r/k, and a quantity of the redundancy packets calculated according to the target redundancy degree and the voice encoded packet is r. If r redundancy packets are *C* =(*C*₁, *C*₂,..., *Cᵣ*), the voice packets are expressed as *̅Y̅*̅ =(*Y*₁, *Y*₂,...,*Yₙ*) , where *Yᵢ* = *Dᵢ* (0 ≤i≤ k-1), and *Yⱼ* = *Cⱼ* (k ≤ j ≤ n-1). B is an n×k-dimensional FEC matrix. The FEC matrix is formed by an identity matrix I and a matrix G. The voice packet may be expressed as follows: $\vec{Y} = \vec{B} \vec{D} = \left[\begin{matrix}I \\ G\end{matrix}\right] \vec{D}$

In an example, as shown in FIG. 4a, the terminal encodes the collected voice to obtain voice encoded packets p1 to p8. When the FEC redundancy degree is adjusted to obtain the target redundancy degree, FEC encoding is performed on the voice encoded packets p1 to p8 according to requirements of the target redundancy degree, to obtain redundancy packets r1, r2, and r3. Voice packets including the voice encoded packets p1 to p8 and the redundancy packets r1 to r3 are obtained through RTP encapsulation. The voice packets are then transmitted to the receiving end through the network.

In an embodiment, the terminal may alternatively receive voice packets transmitted from the receiving end. The voice packets include voice encoded packets and redundancy packets. If the voice packets are parsed to find that there is packet loss, a lost voice encoded packet may be reconstructed according to the remaining voice encoded packets and redundancy packets, to obtain complete voice encoded packets. The voice encoded packets are decoded to obtain a corresponding voice.

For example, at the receiving end, if the receiving end receives any k packets in the voice packets, a corresponding row may be extracted from an FEC matrix *̅B̅*̅ according to location information of the received packets in the voice packets, to form a new k×k-dimensional matrix B', then: $\vec{Y} = B ′ \vec{D}$

If the matrix B' is a non-singular matrix, an original voice encoded packet is obtained through the following inverse transformation, to complete restoration. A transformation formula is as follows: $\vec{D} = {\left(B′\right)}^{- 1} \vec{Y} ′$

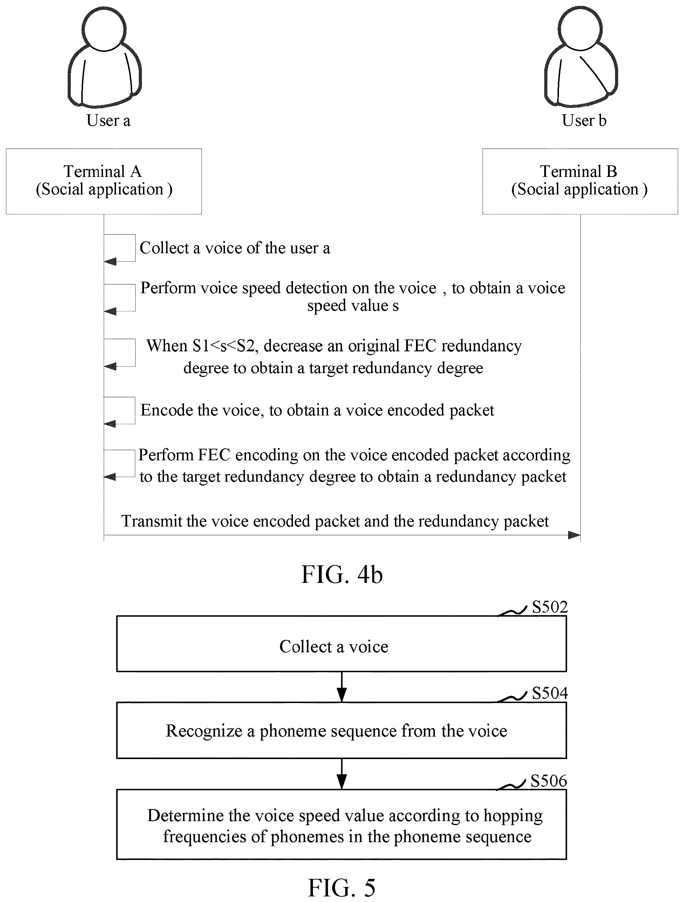

In an example, the voice processing method may be applied to an application scenario of network communication. Referring to FIG. 4b, the details are as follows: a user a and a remote user b conduct voice communication by using social applications, and a terminal A of the user a performs, when collecting a voice uttered by the user a, voice speed detection on the voice uttered by the user a, to obtain a voice speed value s. When the voice speed value s is greater than a voice speed lower limit S1 and less than a voice speed upper limit S2, an original FEC redundancy degree is adjusted according to the voice speed value s, to obtain a target redundancy degree, such as reducing the FEC redundancy degree to obtain the target redundancy degree. When the obtained voice is encoded to obtain a voice encoded packet, FEC encoding is performed on the voice encoded packet according to the target redundancy degree to obtain a redundancy packet, and the redundancy packet and the voice encoded packet are transmitted to a terminal B of the user b.

In the foregoing embodiment, voice speed detection is performed on the voice, and the voice speed value obtained through detection is used to adjust the FEC redundancy degree, so that the adjusted target redundancy degree may be used to perform FEC encoding on the voice encoded packet, to obtain the redundancy packet. When the voice speed is relatively slow, the voice packet includes less voice content; and when the voice speed is relatively fast, the voice packet includes more voice content. The FEC redundancy degree is dynamically adjusted according to the voice speed value, which can ensure that a lost voice packet can be effectively restored, thereby implementing effective error correction of the voice packet, and avoiding the additional consumption of a large amount of bandwidth.

In an embodiment, as shown in FIG. 5, S202 may further include:
S502: Collect a voice.

The voice may be a voice collected by using a microphone in an early stage of a voice or video call of the user; or may be a voice collected by using a microphone in an early stage of a voice or video live broadcast of the user.

In an embodiment, when a voice or video call is made by using an instant messaging application, the terminal collects the voice uttered by the user by using a microphone. The instant messaging applications may include social applications and other applications for instant messaging.

In an embodiment, when a voice or video live broadcast is made by using live streaming software, the terminal collects the voice uttered by the user by using a microphone.

In an embodiment, the terminal uses a window function to frame the collected voice, so as to obtain the framed voice. Specifically, the collected voice may be framed by means of overlapping segments, so that a smooth transition between frames can be implemented. An overlapping part of a previous frame and a next frame is referred to as a frame shift, and a ratio between a frame length of the frame shift and a frame length of the voice frame is usually in a range of 0 to 0.5.

In an embodiment, the terminal detects each voice frame and detects whether each voice frame includes voice content, so that the terminal can perform voice speed detection on a voice frame including voice content.

In an embodiment, the method of detecting whether each voice frame includes voice content may include: the terminal performs PCM on each voice frame to obtain PCM voice data, and inputs the PCM voice data into a vad voice detection function, to output a voice identifier. For example, if the outputted voice identifier is 0, no voice content is included; and if the outputted voice identifier is 1, voice content is included.

S504: Recognize a phoneme sequence from the voice.

Phonemes are divided into two categories of vowels and consonants. A phoneme is a minimum phonetic unit obtained through division according to a natural attribute of a voice. According to a pronunciation action in a syllable, one action constitutes one phoneme. For example, the Chinese syllable "a" has only one phoneme, "ai" has two phonemes, and "dai" has three phonemes.

In an embodiment, S504 may include: performing PCM on the voice to obtain voice encoded data; recognizing a voice segment including voice content from the voice encoded data; and recognizing the phoneme sequence from the voice segment of the voice encoded data.

In an embodiment, the step of performing PCM on the voice to obtain voice encoded data may include: the terminal samples the collected voice, where a sampling frequency is greater than two times the highest frequency of a voice signal. The terminal then quantizes the sampled voice. The quantization may be uniform quantization or non-uniform quantization, and the non-uniform quantization may use a µ-law compression algorithm or an A-law compression algorithm. Finally, the terminal encodes the quantized voice, and packs voice encoded data obtained through encoding into a plurality of voice encoded packets. The encoding methods include waveform encoding, parameter encoding, and hybrid encoding.

In another embodiment, S504 may include: the terminal extracts a voice feature from the voice; decodes the voice feature to obtain a decoded voice feature; and recognizes the phoneme sequence from the decoded voice feature.

The voice feature may be a logarithmic power spectrum or mel frequency cepstrum coefficient of the voice.

In an embodiment, the terminal performs Fourier transform on the collected voice, and converts a voice in the time domain into a frequency spectrum in the frequency domain. The terminal obtains an amplitude corresponding to the frequency spectrum, and uses a power density function to calculate a power spectrum according to the amplitude.

For example, it is assumed that a signal expression of the voice is *f*(*t*), and Fourier transform is performed on *f*(*t*) to obtain the frequency spectrum. If the expression of frequency spectrum is *F_{T}*(*w*), the amplitude corresponding to the frequency spectrum is substituted into the following power spectrum density function to obtain the power spectrum of the voice. $P \left(w\right) = \frac{1}{2 π} {lim}_{T \to ∞} \frac{{\left|{F}_{T}\left(w\right)\right|}^{2}}{T}$

Specifically, the terminal performs Viterbi decoding on the extracted voice feature according to a self-adaptive acoustic model, and recognizes the phoneme sequence from the decoded voice feature. In addition, the terminal may further determine a start time and an end time of each phoneme in the phoneme sequence.

S506: Determine the voice speed value according to hopping frequencies of phonemes in the phoneme sequence.

In an embodiment, S506 may include: detecting a quantity of hoppings of a pitch period or a pitch frequency of phonemes in the phoneme sequence per unit time; and determining the voice speed value according to the quantity of hoppings per unit time.

In an embodiment, the terminal determines whether the quantity of hoppings of the pitch period or the pitch frequency is greater than a preset pitch frequency hopping threshold. If yes, it is determined that the pitch of the voice significantly changes; and if not, it is determined that the pitch of the voice does not significantly change. The pitch period and the pitch frequency are reciprocals of each other and may be converted to each other.

In an embodiment, the terminal performs PCM on each voice frame to obtain PCM voice data, and inputs the PCM voice data into a pitch frequency estimation function to obtain a pitch frequency corresponding to each voice frame. The pitch frequency estimation function may be based on a time-domain autocorrelation function.

In the foregoing embodiment, the phoneme sequence is recognized from the collected voice, and the voice speed value is determined according to the hopping frequencies of the phonemes in the phoneme sequence, so that the FEC redundancy degree can be dynamically adjusted according to the voice speed value, which can ensure that a lost voice packet can be effectively restored, thereby implementing effective error correction of the voice packet, and avoiding the additional consumption of a large amount of bandwidth.

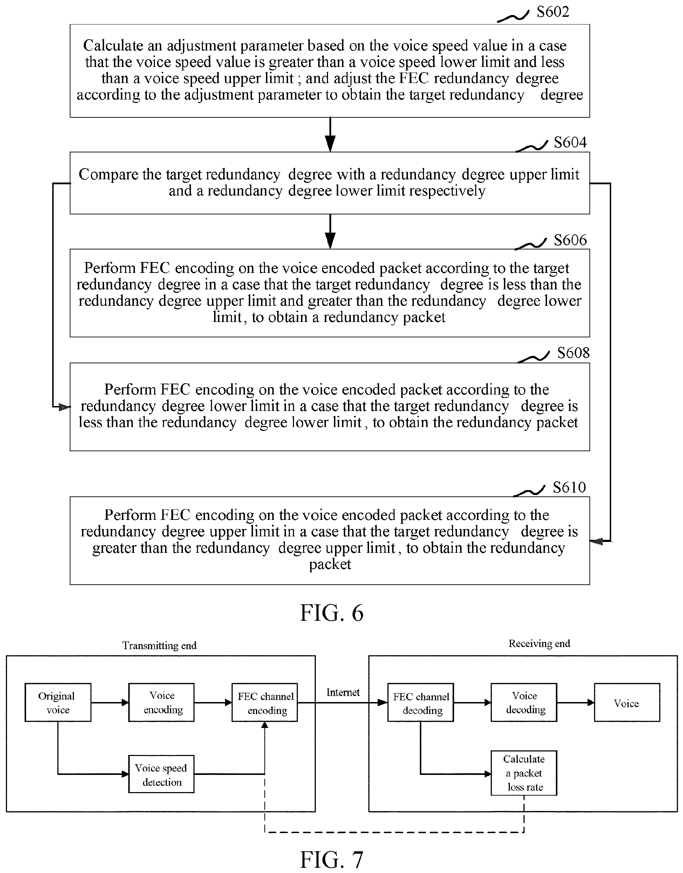

In an embodiment, as shown in FIG. 6, S206 may include:
S602: Calculate an adjustment parameter based on the voice speed value in a case that the voice speed value is greater than a voice speed lower limit and less than a voice speed upper limit; and adjust the FEC redundancy degree according to the adjustment parameter to obtain the target redundancy degree.

In an embodiment, when the voice speed value is greater than the voice speed lower limit and less than the voice speed upper limit, if the voice speed value is greater, the terminal increases the FEC redundancy degree; and if the voice speed value is smaller, the terminal decreases the FEC redundancy degree.

In an embodiment, the terminal inputs the voice speed value into a calculation formula used to adjust the FEC redundancy degree. When an adjustment parameter is calculated, the FEC redundancy degree is also adjusted, to obtain the target redundancy degree.

The calculation formula for adjusting the FEC redundancy degree is $r ′ = {r}_{0} + c \times \left(ν-\frac{{V}_{1} + {V}_{2}}{2}\right)$, *V*₁ ≤ *ν* ≤ *V*₂, where *r*' is the adjusted target redundancy degree, *r*₀ is the FEC redundancy degree, and $c \times \left(ν-\frac{{V}_{1} + {V}_{2}}{2}\right)$ is the adjustment parameter, c being a constant, v being the voice speed value, and *V*₁ and *V*₂ being the voice speed lower limit and the voice speed upper limit respectively.

S604: Compare the target redundancy degree with a redundancy degree upper limit and a redundancy degree lower limit respectively.

Referring to the following function $r ′ = max \left({R}_{min},min\left({R}_{max},{r}_{0}+c\times \left(ν-\frac{{V}_{1} + {V}_{2}}{2}\right)\right)\right.$, *V*₁ ≤ *ν* ≤ *V*₂ , the target redundancy degree ${r}_{0} + c \times \left(ν-\frac{{V}_{1} + {V}_{2}}{2}\right)$ is compared with the redundancy degree upper limit *Rₘₐₓ* and the redundancy degree lower limit *Rₘᵢₙ* respectively, and the final target redundancy degree is determined according to a comparison result. When the target redundancy degree is less than the redundancy degree upper limit and greater than the redundancy degree lower limit, the target redundancy degree ${r}_{0} + c \times \left(ν-\frac{{V}_{1} + {V}_{2}}{2}\right)$ is used as the final target redundancy degree, and S606 is performed. When the target redundancy degree is less than the redundancy degree lower limit, the redundancy degree lower limit is used as the final target redundancy degree, and S608 is performed. When the target redundancy degree is greater than the redundancy degree upper limit, the redundancy degree upper limit is used as the final target redundancy degree, and S610 is performed.

S606: Perform FEC encoding on the voice encoded packet according to the target redundancy degree in a case that the target redundancy degree is less than the redundancy degree upper limit and greater than the redundancy degree lower limit, to obtain a redundancy packet.

In an embodiment, the terminal performs FEC encoding on the voice encoded packet according to the target redundancy degree, to obtain the redundancy packet. A quantity of the redundancy packets is a product of the target redundancy degree and a quantity of the voice encoded packets.

For example, it is assumed that the quantity of the voice encoded packets is k, a word length is w bits, and the value of w may be 8, 16, or 32. The terminal performs FEC encoding on the k voice encoded packets according to the target redundancy degree, and generates m redundancy packets corresponding to the voice encoded packets.

S608: Perform FEC encoding on the voice encoded packet according to the redundancy degree lower limit in a case that the target redundancy degree is less than the redundancy degree lower limit, to obtain the redundancy packet.

In an embodiment, when the target redundancy degree is less than the redundancy degree lower limit, the terminal performs FEC encoding on the voice encoded packet according to the redundancy degree lower limit, to obtain the redundancy packet. A quantity of the redundancy packets is a product of the redundancy degree lower limit and a quantity of the voice encoded packets.

S610: Perform FEC encoding on the voice encoded packet according to the redundancy degree upper limit in a case that the target redundancy degree is greater than the redundancy degree upper limit, to obtain the redundancy packet.

In an embodiment, when the target redundancy degree is greater than the redundancy degree upper limit, the terminal performs FEC encoding on the voice encoded packet according to the redundancy degree upper limit, to obtain the redundancy packet. A quantity of the redundancy packets is a product of the redundancy degree upper limit and a quantity of the voice encoded packets.

Referring to the following function $r ′ = \left\{\begin{matrix}max \left({R}_{min}, {r}_{0}\right) & if \left(ν<{V}_{1}\right) \\ max \left({R}_{min},min\left({R}_{max},{r}_{0}+c\times \left(ν-\frac{{V}_{1} + {V}_{2}}{2}\right)\right)\right) & if \left({V}_{1}\leq ν\leq {V}_{2}\right) \\ min \left({R}_{max}, {r}_{0}\right) & if \left(ν>{V}_{2}\right)\end{matrix}\right. ,$ a maximum value is selected from the FEC redundancy degree and a redundancy degree lower limit in a case that the voice speed value is less than a voice speed upper limit, and FEC encoding is performed on the voice encoded packet according to the maximum value, to obtain the redundancy packet; the operation of performing FEC encoding on the voice encoded packet according to the target redundancy degree to obtain a redundancy packet is performed in a case that the voice speed value is greater than the voice speed lower limit and less than the voice speed upper limit; and a minimum value is selected from the FEC redundancy degree and the redundancy degree upper limit in a case that the voice speed value is greater than the voice speed upper limit, to perform FEC encoding on the voice encoded packet according to the minimum value to obtain the redundancy packet.

In the foregoing embodiment, the FEC redundancy degree is adjusted according to the voice speed value to obtain the adjusted target redundancy degree, so that FEC encoding can be performed on the voice encoded packet according to the target redundancy degree to obtain the redundancy packet. The redundancy packet and the voice encoded packet are encapsulated into the voice packet and transmitted to the receiving end, which can ensure that a lost voice packet during the transmission can be effectively restored, thereby implementing effective error correction of the voice packet, and avoiding the additional consumption of a large amount of bandwidth.

In an example, according to this embodiment, voice speed detection is first performed on the voice of the user to obtain an average voice speed value v. It is assumed that an FEC redundancy degree obtained based on the conventional FEC solution is *r*₀, and the target redundancy degree after adjustment in this embodiment is *r' ,* the calculation of the average voice speed value of the voice, the method of adjusting the FEC redundancy degree, and the FEC encoding through the adjusted target redundancy degree are as follows:

### 1) Calculate an average voice speed

During an actual call, because speaking content is not limited, a non-reference detection method is used in this embodiment to measure a voice speed of the speaker. The calculation of non-reference voice speed detection is implemented based on statistics of a change speed of vad and pitch period. Because a pitch period (or a pitch frequency) before and after the same phoneme is continuous, that is, the hopping is relatively small, and pitch periods (or pitch frequencies) before and after different phonemes have obvious hoppings. The voice speed v is equivalently described by analyzing a quantity of mutations of the pitch period (or a pitch frequency) per unit time and a quantity of voice frame hoppings. A pseudo code thereof is as follows:

```
  //initial
  Changecnt = 0;// Changecnt represents a sum of a quantity of hoppings of the pitch
 frequency per unit time and a quantity of hoppings from a non-voice frame to a voice frame
  Totcnt = 0;// Totcnt represents a quantity of currently detected frames
  vad_cur = 0;// vad_cur represents a voice identifier of a current frame, where a value
 thereof being 0 indicates that the frame is a
non-voice frame, and the value being 1 indicates that
 the frame is a voice frame
  vad_pre = 0;// vad_pre represents a voice identifier of a previous frame, where a
 value thereof being 0 indicates that the frame
is a non-voice frame, and the value being 1 indicates
 that the frame is a voice frame
  pitchfreq_cur = 0;// pitchfreq_cur represents a pitch frequency of the current frame
  pitchfreq_pre = 0;// pitchfreq_pre represents a pitch frequency of the previous frame
  pitchfreq_cur = PitchFreqEst(pcmdata);// PitchFreqEst() is the pitch frequency
 estimation function, the input is the PCM voice data, and the output is the estimated pitch
 frequency. The pitch frequency estimation may be calculated based on time-domain autocorrelation
 or a cepstrum method
  vad_cur = VadDet(pcmdata);// VadDet() is the vad voice detection function, the
 input is the PCM voice data, and the output
is the voice identifier, where the output being 0
 indicates that the frame is a non-voice frame
without voice content, and the output being 1 indicates
 that the frame is a voice frame with voice content
  If Totcnt <= T Then // T represents a voice speed detection period
  Totent++;
  If vad_cur = 1 Then
  if abs(pitchfreq_pre-pitchfreq_cur)> threshold1 Then // threshold1 represents the
 preset pitch frequency hopping threshold. If the change value exceeds the threshold, the pitch
 changes significantly
  Changecnt++;
  End
  End
  pitchfreq_pre = pitchfreq_cur;
  If vad_cur = 1 and vad_pre = 0 Then
  Changecnt++;
  End
  Else
  v = Changecnt;
  Totcnt = 0;
  Changecnt = 0;
  End
 
```

Through the foregoing process, a concatenated voice speed value v may be obtained for subsequent FEC redundancy degree calculation.

### 2) FEC redundancy degree calculation

The average voice speed value v obtained above, and the final target redundancy degree *r'* are obtained by using the following calculation formula: $r ′ = \left\{\begin{matrix}max \left({R}_{min}, {r}_{0}\right) & if \left(ν<{V}_{1}\right) \\ max \left({R}_{min},min\left({R}_{max},{r}_{0}+c\times \left(ν-\frac{{V}_{1} + {V}_{2}}{2}\right)\right)\right) & if \left({V}_{1}\leq ν\leq {V}_{2}\right) \\ min \left({R}_{max}, {r}_{0}\right) & if \left(ν>{V}_{2}\right)\end{matrix}\right.$

In the foregoing formula, the following constant values are preset: the voice speed upper limit *V*₂ and the voice speed lower limit *V*₁, the redundancy degree lower limit *R*ₘᵢₙ and the redundancy degree upper limit *R*ₘₐₓ, and the constant c. The target redundancy degree *r'* may be calculated by using the foregoing formula.

3) Obtain the voice uttered by the user, and perform voice encoding on the voice to obtain a plurality of voice encoded packets; perform FEC encoding on the voice encoded packets according to the target redundancy degree *r'* to obtain corresponding redundancy packets; pack the redundancy packets and the voice encoded packets by the RTP method, to obtain RTP voice packets; and transmit the RTP voice packets to the receiving end through the network, as shown in FIG. 7.

As shown in FIG. 7, after receiving the RTP voice packets, the receiving end counts a packet loss rate and performs FEC decoding to restore lost voice encoded packets, and decodes all the voice encoded packets, to obtain the original voice of the user.

The FEC redundancy degree is adjusted based on a voice speed detection result of the speaker, to ensure more effective protection of the transmitted voice content, improve the voice quality of end-to-end calls, and implement the high-reliability Voice over Internet Protocol (VoIP), and real-time voice data transmission of services such as broadcast, voice, and video live broadcast.

FIG. 2, FIG. 5, and FIG. 6 are schematic flowcharts of a voice processing method according to an embodiment. It is to be understood that, although the steps in the flowcharts of FIG. 2, FIG. 5, and FIG. 6 are sequentially displayed according to indication of arrows, the steps are not necessarily sequentially performed in the sequence indicated by the arrows. Unless clearly specified in this specification, there is no strict sequence limitation on the execution of the steps, and the steps may be performed in another sequence. In addition, at least some steps in FIG. 2, FIG. 5, and FIG. 6 may include a plurality of substeps or a plurality of stages. The substeps or the stages are not necessarily performed at the same moment, and instead may be performed at different moments. The substeps or the stages are not necessarily performed sequentially, and instead may be performed in turn or alternately with another step or at least some of substeps or stages of the another step.

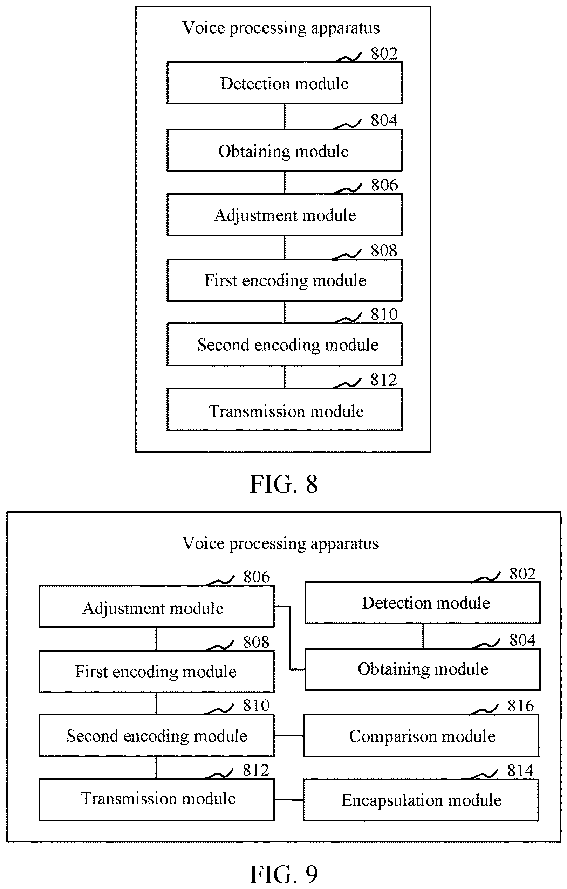

As shown in FIG. 8, an embodiment of the present disclosure provides a voice processing apparatus. The apparatus includes: a detection module 802, an obtaining module 804, an adjustment module 806, a first encoding module 808, a second encoding module 810, and a transmission module 812, where
the detection module 802 is configured to perform voice speed detection on an obtained voice, to obtain a voice speed value;
the obtaining module 804 is configured to obtain an FEC redundancy degree;
the adjustment module 806 is configured to adjust the FEC redundancy degree according to the voice speed value to obtain a target redundancy degree;
the first encoding module 808 is configured to perform voice encoding on the voice to obtain a voice encoded packet;
the second encoding module 810 is configured to perform FEC encoding on the voice encoded packet according to the target redundancy degree to obtain a redundancy packet; and
the transmission module 812 is configured to transmit the redundancy packet and the voice encoded packet to a receiving end.
In an embodiment, as shown in FIG. 9, the apparatus further includes an encapsulation module 814, where
the encapsulation module 814 is configured to encapsulate the voice encoded packet and the redundancy packet by using an RTP, to obtain an encapsulated voice packet; and
the transmission module 812 is further configured to transmit the voice packet obtained by encapsulating the voice encoded packet and the redundancy packet to the receiving end.

In the foregoing embodiment, voice speed detection is performed on the voice, and the voice speed value obtained through detection is used to adjust the FEC redundancy degree, so that the adjusted target redundancy degree may be used to perform FEC encoding on the voice encoded packet, to obtain the redundancy packet. When the voice speed is relatively slow, the voice packet includes less voice content; and when the voice speed is relatively fast, the voice packet includes more voice content. The FEC redundancy degree is dynamically adjusted according to the voice speed value, which can ensure that a lost voice packet can be effectively restored, thereby implementing effective error correction of the voice packet, and avoiding the additional consumption of a large amount of bandwidth.

In an embodiment, the detection module 802 is further configured to: obtain a voice; recognize a phoneme sequence from the obtained voice; and determine the voice speed value according to hopping frequencies of phonemes in the phoneme sequence.

In an embodiment, the detection module 802 is further configured to: perform PCM on the voice to obtain voice encoded data; recognize a voice segment from the voice encoded data; and recognize the phoneme sequence from the voice segment of the voice encoded data.

In an embodiment, the detection module 802 is further configured to: extract a voice feature from the voice; decode the voice feature to obtain a decoded voice feature; and recognize the phoneme sequence from the decoded voice feature.

In an embodiment, the detection module 802 is further configured to: detect a quantity of hoppings of a pitch period or a pitch frequency of phonemes in the phoneme sequence per unit time; and determine the voice speed value according to the quantity of hoppings per unit time.

In the foregoing embodiment, the phoneme sequence is recognized from the collected voice, and the voice speed value is determined according to the hopping frequencies of the phonemes in the phoneme sequence, so that the FEC redundancy degree can be dynamically adjusted according to the voice speed value, which can ensure that a lost voice packet can be effectively restored, thereby implementing effective error correction of the voice packet, and avoiding the additional consumption of a large amount of bandwidth.

In an embodiment, the adjustment module 806 is further configured to: calculate an adjustment parameter based on the voice speed value in a case that the voice speed value is greater than a voice speed lower limit and less than a voice speed upper limit; and adjust the FEC redundancy degree according to the adjustment parameter to obtain the target redundancy degree.

In an embodiment, as shown in FIG. 9, the apparatus further includes a comparison module 816, where
the comparison module 816 is configured to compare the target redundancy degree with a redundancy degree upper limit and a redundancy degree lower limit respectively; and in a case that the target redundancy degree is less than the redundancy degree upper limit and greater than the redundancy degree lower limit, the second encoding module 810 performs FEC encoding on the voice encoded packet according to the target redundancy degree, to obtain a redundancy packet.

In an embodiment, the second encoding module 810 is further configured to perform FEC encoding on the voice encoded packet according to the redundancy degree lower limit in a case that the target redundancy degree is less than the redundancy degree lower limit, to obtain the redundancy packet; and perform FEC encoding on the voice encoded packet according to the redundancy degree upper limit in a case that the target redundancy degree is greater than the redundancy degree upper limit, to obtain the redundancy packet.

In an embodiment, the second encoding module 810 is further configured to:
select a maximum value from the FEC redundancy degree and a redundancy degree lower limit in a case that the voice speed value is less than a voice speed upper limit, and perform FEC encoding on the voice encoded packet according to the maximum value, to obtain the redundancy packet;
perform, in a case that the voice speed value is greater than a voice speed lower limit and less than the voice speed upper limit, the operation of performing FEC encoding on the voice encoded packet according to the target redundancy degree to obtain a redundancy packet; and
select a minimum value from the FEC redundancy degree and the redundancy degree upper limit in a case that the voice speed value is greater than the voice speed upper limit, to perform FEC encoding on the voice encoded packet according to the minimum value to obtain the redundancy packet.

In the foregoing embodiment, the FEC redundancy degree is adjusted according to the voice speed value to obtain the adjusted target redundancy degree, so that FEC encoding can be performed on the voice encoded packet according to the target redundancy degree to obtain the redundancy packet. The redundancy packet and the voice encoded packet are encapsulated into the voice packet and transmitted to the receiving end, which can ensure that a lost voice packet during the transmission can be effectively restored, thereby implementing effective error correction of the voice packet, and avoiding the additional consumption of a large amount of bandwidth.

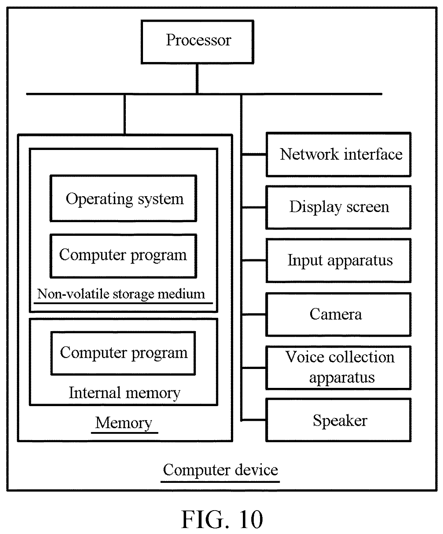

FIG. 10 is a diagram of an internal structure of a computer device according to an embodiment. The computer device may be specifically the terminal 110 in FIG. 1. As shown in FIG. 10, the computer device includes a processor, a memory, a network interface, an input apparatus and a display screen that are connected by using a system bus. The memory includes a non-volatile storage medium and an internal memory. The non-volatile storage medium of the computer device stores an operating system and may further store a computer program, the computer program, when executed by the processor, causing the processor to implement the voice processing method. The internal memory may also store a computer program, and the computer program, when executed by the processor, may cause the processor to perform the voice processing method. The display screen of the computer device may be a liquid crystal display screen or an e-ink display screen. The input apparatus of the computer device may be a touch layer covering the display screen, or a button, a trackball, or a touchpad disposed on a housing of the computer device, or an external keyboard, touchpad, mouse, or the like.

A person skilled in the art may understand that, the structure shown in FIG. 10 is only a block diagram of a part of a structure related to a solution of this application and does not limit the computer device to which the solution of this application is applied. Specifically, the computer device may include more or fewer members than those in the drawings, or include a combination of some members, or include different member layouts.

In an embodiment, the voice processing apparatus provided in this application may be implemented in a form of a computer program, and the computer program may be run on the computer device shown in FIG. 10. The memory of the computer device may store program modules forming the voice processing apparatus, for example, the detection module 802, the obtaining module 804, the adjustment module 806, the first encoding module 808, the second encoding module 810, and the transmission module 812 shown in FIG. 8. A computer program formed by the program modules causes the processor to perform steps in the voice processing method in the embodiments of this application described in this specification.

For example, the computer device shown in FIG. 10 may perform S202 by using the detection module 802 in the voice processing apparatus shown in FIG. 8. The computer device may perform S204 by using the obtaining module 804. The computer device may perform S206 by using the adjustment module 806. The first encoding module 808 performs S208. The computer device may perform S210 by using the second encoding module 810. The computer device may perform S212 by using the transmission module 812.

In an embodiment, a computer device is provided, including a memory and a processor, the memory storing a computer program, and the computer program, when executed by the processor, causing the processor to perform the following steps: performing voice speed detection on an obtained voice, to obtain a voice speed value; obtaining an FEC redundancy degree; adjusting the FEC redundancy degree according to the voice speed value to obtain a target redundancy degree; performing voice encoding on the voice to obtain a voice encoded packet; performing FEC encoding on the voice encoded packet according to the target redundancy degree to obtain a redundancy packet; and transmitting the redundancy packet and the voice encoded packet to a receiving end.

In an embodiment, when the processor performs the step of performing voice speed detection on an obtained voice, to obtain a voice speed value, the computer program causes the processor to specifically perform the following steps: obtaining a voice; recognizing a phoneme sequence from the voice; and determining the voice speed value according to hopping frequencies of phonemes in the phoneme sequence.

In an embodiment, when the processor performs the step of recognizing a phoneme sequence from the voice, the computer program causes the processor to specifically perform the following steps: performing PCM on the voice to obtain voice encoded data; recognizing a voice segment including voice content from the voice encoded data; and recognizing the phoneme sequence from the voice segment of the voice encoded data.

In an embodiment, when the processor performs the step of recognizing a phoneme sequence from the voice, the computer program causes the processor to specifically perform the following steps: extracting a voice feature from the voice; decoding the voice feature to obtain the decoded voice feature; and recognizing the phoneme sequence from the decoded voice feature.

In an embodiment, when the processor performs the step of determining the voice speed value according to hopping frequencies of phonemes in the phoneme sequence, the computer program causes the processor to specifically perform the following steps: detecting a quantity of hoppings of a pitch period or a pitch frequency of phonemes in the phoneme sequence per unit time; and determining the voice speed value according to the quantity of hoppings per unit time.

In an embodiment, when the processor performs the step of adjusting the FEC redundancy degree according to the voice speed value to obtain a target redundancy degree, the computer program causes the processor to specifically perform the following steps: calculating an adjustment parameter based on the voice speed value in a case that the voice speed value is greater than a voice speed lower limit and less than a voice speed upper limit; and adjusting the FEC redundancy degree according to the adjustment parameter to obtain the target redundancy degree.

In an embodiment, when executed by the processor, the computer program causes the processor to further perform the following steps: comparing the target redundancy degree with a redundancy degree upper limit and a redundancy degree lower limit respectively; and performing, in a case that the target redundancy degree is less than the redundancy degree upper limit and greater than the redundancy degree lower limit, the operation of performing FEC encoding on the voice encoded packet according to the target redundancy degree to obtain a redundancy packet.

In an embodiment, when executed by the processor, the computer program causes the processor to further perform the following steps: performing FEC encoding on the voice encoded packet according to the redundancy degree lower limit in a case that the target redundancy degree is less than the redundancy degree lower limit, to obtain the redundancy packet; and
performing FEC encoding on the voice encoded packet according to the redundancy degree upper limit in a case that the target redundancy degree is greater than the redundancy degree upper limit, to obtain the redundancy packet.
In an embodiment, when executed by the processor, the computer program causes the processor to further perform the following steps:
selecting a maximum value from the FEC redundancy degree and a redundancy degree lower limit in a case that the voice speed value is less than a voice speed upper limit, and performing FEC encoding on the voice encoded packet according to the maximum value, to obtain the redundancy packet;
performing, in a case that the voice speed value is greater than a voice speed lower limit and less than the voice speed upper limit, the operation of performing FEC encoding on the voice encoded packet according to the target redundancy degree to obtain a redundancy packet; and
selecting a minimum value from the FEC redundancy degree and the redundancy degree upper limit in a case that the voice speed value is greater than the voice speed upper limit, to perform FEC encoding on the voice encoded packet according to the minimum value to obtain the redundancy packet.

In an embodiment, when executed by the processor, the computer program causes the processor to further perform the following steps: encapsulating the voice encoded packet and the redundancy packet by using an RTP to obtain an encapsulated voice packet; and
when the processor performs the step of transmitting the redundancy packet and the voice encoded packet to a receiving end, the computer program causes the processor to specifically perform the following step:
transmitting the voice packet obtained by encapsulating the voice encoded packet and the redundancy packet to the receiving end.

In an embodiment, a computer-readable storage medium is provided, storing a computer program, the computer program, when executed by a processor, causing the processor to perform the following steps: performing voice speed detection on an obtained voice, to obtain a voice speed value; obtaining an FEC redundancy degree; adjusting the FEC redundancy degree according to the voice speed value to obtain a target redundancy degree; performing voice encoding on the voice to obtain a voice encoded packet; performing FEC encoding on the voice encoded packet according to the target redundancy degree to obtain a redundancy packet; and transmitting the redundancy packet and the voice encoded packet to a receiving end.

In an embodiment, when the processor performs the step of performing voice speed detection on an obtained voice, to obtain a voice speed value, the computer program causes the processor to specifically perform the following steps: obtaining a voice; recognizing a phoneme sequence from the voice; and determining the voice speed value according to hopping frequencies of phonemes in the phoneme sequence.

In an embodiment, when the processor performs the step of recognizing a phoneme sequence from the voice, the computer program causes the processor to specifically perform the following steps: performing PCM on the voice to obtain voice encoded data; recognizing a voice segment including voice content from the voice encoded data; and recognizing the phoneme sequence from the voice segment of the voice encoded data.

In an embodiment, when the processor performs the step of recognizing a phoneme sequence from the voice, the computer program causes the processor to specifically perform the following steps: extracting a voice feature from the voice; decoding the voice feature to obtain the decoded voice feature; and recognizing the phoneme sequence from the decoded voice feature.

In an embodiment, when the processor performs the step of determining the voice speed value according to hopping frequencies of phonemes in the phoneme sequence, the computer program causes the processor to specifically perform the following steps: detecting a quantity of hoppings of a pitch period or a pitch frequency of phonemes in the phoneme sequence per unit time; and determining the voice speed value according to the quantity of hoppings per unit time.

In an embodiment, when the processor performs the step of adjusting the FEC redundancy degree according to the voice speed value to obtain a target redundancy degree, the computer program causes the processor to specifically perform the following steps: calculating an adjustment parameter based on the voice speed value in a case that the voice speed value is greater than a voice speed lower limit and less than a voice speed upper limit; and adjusting the FEC redundancy degree according to the adjustment parameter to obtain the target redundancy degree.

In an embodiment, when executed by the processor, the computer program causes the processor to further perform the following steps: comparing the target redundancy degree with a redundancy degree upper limit and a redundancy degree lower limit respectively; and performing, in a case that the target redundancy degree is less than the redundancy degree upper limit and greater than the redundancy degree lower limit, the operation of performing FEC encoding on the voice encoded packet according to the target redundancy degree to obtain a redundancy packet.

In an embodiment, when executed by the processor, the computer program causes the processor to further perform the following steps: performing FEC encoding on the voice encoded packet according to the redundancy degree lower limit in a case that the target redundancy degree is less than the redundancy degree lower limit, to obtain the redundancy packet; and
performing FEC encoding on the voice encoded packet according to the redundancy degree upper limit in a case that the target redundancy degree is greater than the redundancy degree upper limit, to obtain the redundancy packet.

In an embodiment, when executed by the processor, the computer program causes the processor to further perform the following step:
selecting a maximum value from the FEC redundancy degree and a redundancy degree lower limit in a case that the voice speed value is less than a voice speed upper limit, and performing FEC encoding on the voice encoded packet according to the maximum value, to obtain the redundancy packet;
performing, in a case that the voice speed value is greater than a voice speed lower limit and less than the voice speed upper limit, the operation of performing FEC encoding on the voice encoded packet according to the target redundancy degree to obtain a redundancy packet; and
selecting a minimum value from the FEC redundancy degree and the redundancy degree upper limit in a case that the voice speed value is greater than the voice speed upper limit, to perform FEC encoding on the voice encoded packet according to the minimum value to obtain the redundancy packet.

In an embodiment, when executed by the processor, the computer program causes the processor to further perform the following steps: encapsulating the voice encoded packet and the redundancy packet by using an RTP to obtain an encapsulated voice packet; and
when the processor performs the step of transmitting the redundancy packet and the voice encoded packet to a receiving end, the computer program causes the processor to specifically perform the following step:
transmitting the voice packet obtained by encapsulating the voice encoded packet and the redundancy packet to the receiving end.

A person of ordinary skill in the art may understand that all or some of procedures of the methods in the foregoing embodiments may be implemented by a computer program instructing relevant hardware. The program may be stored in a non-volatile computer-readable storage medium. When the program is executed, the procedures of the foregoing method embodiments may be implemented. Any reference to a memory, a storage, a database, or another medium used in the embodiments provided in this application can include a non-volatile and/or volatile memory. The non-volatile memory may include a read-only memory (ROM), a programmable ROM (PROM), an electrically programmable ROM (EPROM), an electrically erasable programmable ROM (EEPROM), a flash memory, or the like. The volatile memory may include a RAM or an external cache. By way of description rather than limitation, the RAM may be obtained in a plurality of forms, such as a static RAM (SRAM), a dynamic RAM (DRAM), a synchronous DRAM (SDRAM), a double data rate SDRAM (DDR SDRAM), an enhanced SDRAM (ESDRAM), a Synchlink DRAM (SLDRAM), a Rambus direct RAM (RDRAM), a direct Rambus dynamic RAM (DRDRAM), and a Rambus dynamic RAM (RDRAM).

The foregoing embodiments only show several implementations of this application, and descriptions thereof are in detail, but are not to be understood as a limitation to the patent scope of this application. Therefore, the protection scope of this application is subject to the protection scope of the appended claims.

## Claims

1. A voice processing method, performed by a terminal, the method comprising:
performing (S202) voice speed detection on an obtained voice, to obtain a voice speed value;
performing (S208) voice encoding on the voice to obtain a voice encoded packet;
obtaining (S204) a forward error correction, FEC, redundancy degree according to a loss rate of the voice encoded packet, wherein the FEC redundancy degree is a ratio of a quantity of redundancy packets to a quantity of voice packets;
adjusting (S206) the FEC redundancy degree according to the voice speed value to obtain a target redundancy degree;
performing (S210) FEC encoding on the voice encoded packet according to the target redundancy degree $r ′ = max \left({R}_{min},min\left({R}_{max},{r}_{0}+c\times \left(ν-\frac{{V}_{1} + {V}_{2}}{2}\right)\right)\right.$, wherein r' is the target redundancy degree, r₀ is the FEC redundancy degree, c is a constant, ν is the voice speed value, V₁ and V₂ are a voice speed lower limit and a voice speed upper limit respectively, *Rₘₐₓ* is a redundancy degree upper limit and *Rₘᵢₙ* is a redundancy degree lower limit, to obtain a redundancy packet; and
transmitting (S212) the redundancy packet and the voice encoded packet to a receiving end.

2. The method according to claim 1, wherein the performing (S202) voice speed detection on an obtained voice, to obtain a voice speed value comprises:
recognizing (S504) a phoneme sequence from the obtained voice; and
determining (S506) the voice speed value according to hopping frequencies of phonemes in the phoneme sequence.

3. The method according to claim 2, wherein the recognizing (S504) a phoneme sequence from the obtained voice comprises:
performing pulse code modulation, PCM, on the obtained voice to obtain voice encoded data;
recognizing a voice segment comprising voice content from the voice encoded data; and
recognizing the phoneme sequence from the voice segment of the voice encoded data.

4. The method according to claim 2, wherein the recognizing (S504) a phoneme sequence from the obtained voice comprises:
extracting a voice feature from the obtained voice;
decoding the voice feature to obtain a decoded voice feature; and
recognizing the phoneme sequence from the decoded voice feature.

5. The method according to claim 2, wherein the determining (S506) the voice speed value according to hopping frequencies of phonemes in the phoneme sequence comprises:
detecting a quantity of hoppings of a pitch period or a pitch frequency of phonemes in the phoneme sequence per unit time; and
determining the voice speed value according to the quantity of hoppings per unit time.

6. The method according to any one of claims 1 to 5, wherein before the transmitting (S212) the redundancy packet and the voice encoded packet to a receiving end, the method further comprises:
encapsulating the voice encoded packet and the redundancy packet by using a real-time transport protocol, RTP, to obtain an encapsulated voice packet; and
the transmitting the redundancy packet and the voice encoded packet to a receiving end comprises:
transmitting the voice packet obtained by encapsulating the voice encoded packet and the redundancy packet to the receiving end.

7. A computer-readable storage medium comprising instructions which, when executed by a computer, cause the computer to perform the method according to any one of claims 1 to 6.

8. A computer device, comprising a memory and a processor, the memory storing a computer program, the computer program, when executed by the processor, causes the processor to perform the operations of the method according to any one of claims 1 to 6.

## Patentansprüche

1. Sprachverarbeitungsverfahren, das von einem Endgerät durchgeführt wird, wobei das Verfahren umfasst:
Durchführen (S202) einer Sprechgeschwindigkeitserkennung an einer erhaltenen Sprache, um einen Sprechgeschwindigkeitswert zu erhalten;
Durchführen (S208) einer Sprachcodierung an der Sprache, um ein codiertes Sprachpaket zu erhalten;
Erhalten (S204) eines Redundanzgrads einer Vorwärtsfehlerkorrektur (FEC) gemäß einer Verlustrate des codierten Sprachpakets, wobei der FEC-Redundanzgrad ein Verhältnis einer Anzahl von Redundanzpaketen zu einer Anzahl von Sprachpaketen ist;
Anpassen (S206) des FEC-Redundanzgrads gemäß dem Sprechgeschwindigkeitswert, um einen Zielredundanzgrad zu erhalten;
Durchführen (S210) einer FEC-Codierung an dem codierten Sprachpaket gemäß dem angepassten Zielredundanzgrad $r ′ = max \left({R}_{min},min\left({R}_{max},{r}_{0}+c\times \left(ν-\frac{{V}_{1} + {V}_{2}}{2}\right)\right)\right.$
wobei *r*' der angepasste Zielredundanzgrad ist, *r*₀ der FEC-Redundanzgrad ist, *c* eine Konstante ist, *v* der Sprechgeschwindigkeitswert ist, *V*₁ und *V*₂ eine untere Sprechgeschwindigkeitsgrenze beziehungsweise eine obere Sprechgeschwindigkeitsgrenze sind und *Rₘₐₓ* eine obere Redundanzgradgrenze und *Rₘᵢₙ* eine untere Redundanzgradgrenze ist, um ein Redundanzpaket zu erhalten; und
Übertragen (S212) des Redundanzpakets und des codierten Sprachpakets an eine Empfangsseite.

2. Verfahren nach Anspruch 1, wobei das Durchführen (S202) einer Sprechgeschwindigkeitserkennung an einer erhaltenen Sprache, um einen Sprechgeschwindigkeitswert zu erhalten, umfasst:
Erkennen (S504) einer Phonemsequenz aus der erhaltenen Sprache; und
Bestimmen (S506) des Sprechgeschwindigkeitswerts gemäß Sprungfrequenzen von Phonemen in der Phonemsequenz.

3. Verfahren nach Anspruch 2, wobei das Erkennen (S504) einer Phonemsequenz aus der erhaltenen Sprache umfasst:
Durchführen einer Pulscodemodulation (PCM) an der erhaltenen Sprache, um codierte Sprachdaten zu erhalten;
Erkennen eines Sprachsegments, das Sprachinhalt umfasst, aus den codierten Sprachdaten; und
Erkennen der Phonemsequenz aus dem Sprachsegment der codierten Sprachdaten.

4. Verfahren nach Anspruch 2, wobei das Erkennen (S504) einer Phonemsequenz aus der erhaltenen Sprache umfasst:
Extrahieren eines Sprachmerkmals aus der erhaltenen Sprache;
Decodieren des Sprachmerkmals, um ein decodiertes Sprachmerkmal zu erhalten; und
Erkennen der Phonemsequenz aus dem decodierten Sprachmerkmal.

5. Verfahren nach Anspruch 2, wobei das Bestimmen (S506) des Sprechgeschwindigkeitswerts gemäß Sprungfrequenzen von Phonemen in der Phonemsequenz umfasst:
Erfassen einer Anzahl von Sprüngen einer Tonhöhenperiode oder einer Tonhöhenfrequenz von Phonemen in der Phonemsequenz pro Zeiteinheit; und
Bestimmen des Sprechgeschwindigkeitswerts gemäß der Anzahl von Sprüngen pro Zeiteinheit.

6. Verfahren nach einem der Ansprüche 1 bis 5, wobei das Verfahren vor dem Übertragen (S212) des Redundanzpakets und des codierten Sprachpakets an eine Empfangsseite ferner umfasst:
Kapseln des codierten Sprachpakets und des Redundanzpakets unter Verwendung eines Echtzeit-Transportprotokolls (RTP), um ein gekapseltes Sprachpaket zu erhalten; und
wobei das Übertragen des Redundanzpakets und des codierten Sprachpakets an eine Empfangsseite umfasst:
Übertragen des Sprachpakets, das durch Kapseln des codierten Sprachpakets und des Redundanzpakets erhalten wurde, an die Empfangsseite.

7. Computerlesbares Speichermedium, umfassend Anweisungen, die bei Ausführung durch einen Computer den Computer veranlassen, das Verfahren nach einem der Ansprüche 1 bis 6 durchzuführen.

8. Computervorrichtung, umfassend einen Speicher und einen Prozessor, wobei der Speicher ein Computerprogramm speichert, das bei Ausführung durch den Prozessor den Prozessor veranlasst, die Schritte des Verfahrens nach einem der Ansprüche 1 bis 6 durchzuführen.

## Revendications

1. Procédé de traitement vocal, mis en œuvre par un terminal, le procédé comprenant :
une détection (S202) de la vitesse d'élocution d'une voix obtenue, afin d'obtenir une valeur de vitesse d'élocution ;
un codage (S208) de la voix afin d'obtenir un paquet vocal codé ;
une obtention (S204) d'un degré de redondance de correction d'erreurs directe (FEC) en fonction d'un taux de perte du paquet vocal codé, le degré de redondance FEC étant un rapport entre un nombre de paquets de redondance et un nombre de paquets vocaux ;
un ajustement (S206) du degré de redondance FEC en fonction de la valeur de vitesse d'élocution afin d'obtenir un degré de redondance cible ;
un codage FEC (S210) du paquet vocal codé selon le degré de redondance cible ajusté $r ′ = max \left({R}_{min},min\left({R}_{max},{r}_{0}+c\times \left(ν-\frac{{V}_{1} + {V}_{2}}{2}\right)\right)\right.$, dans lequel *r*' est le degré de redondance cible ajusté, *r*₀ est le degré de redondance FEC, *c* est une constante, *v* est la valeur de vitesse d'élocution, *V*₁ et *V*₂ sont respectivement une limite inférieure et une limite supérieure de vitesse d'élocution, *Rₘₐₓ* est une limite supérieure du degré de redondance et *Rₘᵢₙ* est une limite inférieure du degré de redondance, afin d'obtenir un paquet de redondance ; et
une transmission (S212) du paquet de redondance et du paquet vocal codé à une extrémité réceptrice.

2. Procédé selon la revendication 1, dans lequel la détection (S202) de la vitesse d'élocution d'une voix obtenue, afin d'obtenir une valeur de vitesse d'élocution, comprend :
une reconnaissance (S504) d'une séquence de phonèmes à partir de la voix obtenue ; et
une détermination (S506) de la valeur de vitesse d'élocution en fonction de fréquences de saut de phonèmes dans la séquence de phonèmes.

3. Procédé selon la revendication 2, dans lequel la reconnaissance (S504) d'une séquence de phonèmes à partir de la voix obtenue comprend :
une modulation par impulsions codées (PCM) de la voix obtenue afin d'obtenir des données vocales codées ;
une reconnaissance, à partir des données vocales codées, d'un segment vocal comprenant un contenu vocal ; et
une reconnaissance de la séquence de phonèmes à partir du segment vocal des données vocales codées.

4. Procédé selon la revendication 2, dans lequel la reconnaissance (S504) d'une séquence de phonèmes à partir de la voix obtenue comprend :
une extraction d'une caractéristique vocale à partir de la voix obtenue ;
un décodage de la caractéristique vocale afin d'obtenir une caractéristique vocale décodée ; et
une reconnaissance de la séquence de phonèmes à partir de la caractéristique vocale décodée.

5. Procédé selon la revendication 2, dans lequel la détermination (S506) de la valeur de vitesse d'élocution en fonction de fréquences de saut de phonèmes dans la séquence de phonèmes comprend :
une détection d'un nombre de sauts d'une période de hauteur tonale ou d'une fréquence de hauteur tonale des phonèmes dans la séquence de phonèmes par unité de temps ; et
une détermination de la valeur de vitesse d'élocution en fonction du nombre de sauts par unité de temps.

6. Procédé selon l'une quelconque des revendications 1 à 5, dans lequel, avant la transmission (S212) du paquet de redondance et du paquet vocal codé à une extrémité réceptrice, le procédé comprend en outre :
une encapsulation du paquet vocal codé et du paquet de redondance au moyen d'un protocole de transport en temps réel (RTP), afin d'obtenir un paquet vocal encapsulé ; et
la transmission du paquet de redondance et du paquet vocal codé à une extrémité réceptrice comprend :
une transmission, à l'extrémité réceptrice, du paquet vocal obtenu par encapsulation du paquet vocal codé et du paquet de redondance.

7. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 6.

8. Dispositif informatique comprenant une mémoire et un processeur, la mémoire stockant un programme informatique qui, lorsqu'il est exécuté par le processeur, amène le processeur à effectuer les opérations du procédé selon l'une quelconque des revendications 1 à 6.
